# EUROPEAN PATENT SPECIFICATION

(11) **EP 4 364 974 B1**
(45) Date of publication and mention of the grant of the patent: **28.05.2025**
(21) Application number: 23198330.5
(22) Date of filing: 19.09.2023
(51) Int. Cl.: B60C 11/12, B29D 30/06

(54) **PNEUMATIC TIRE AND TIRE MOLD**
LUFTREIFEN UND REIFENFORM
PNEUMATIQUE ET MOULE POUR PNEUMATIQUE

(30) Priority: 07.11.2022 JP 2022178220
(43) Date of publication of application: 08.05.2024
(73) Proprietor: TOYO TIRE CORPORATION, Itami-shi, Hyogo 6640847 (JP)
(72) Inventor: AMIMOTO, Hiroki, Itami-shi, 6640847 (JP)
(74) Representative: Balder IP Law, S.L.

(56) References cited:
- EP-A1- 3 805 019
- DE-A1- 102012 101 149
- DE-A1- 102015 205 760
- DE-A1- 102016 224 370
- JP-A- 2003 118 322

## Description

### TECHNICAL FIELD

The present invention relates to a pneumatic tire having a tread including blocks in which waveform sipes are formed, and a tire mold for molding the pneumatic tire.

### BACKGROUND

The pneumatic tire has a tread which is a portion that contacts a road surface. The tread includes a plurality of blocks. Each block has sipes formed therein. The sipes provide an edge effect and a water removing effect on icy and snowy roads. The sipes on the pneumatic tire are molded by using sipe blades arranged in a tire mold.

For example, JP 3,682,918 B discloses a waveform sipe where the pitch of the waveform increases and the amplitude of the waveform decreases from a block surface side to a block bottom side. European Patent No. 3,805,019 also discloses a waveform sipe where the amplitude of the waveform decreases from the block surface side to the block bottom side.

However, the pneumatic tires disclosed in JP 3,682,918 B and European Patent No. 3,805,019 have room for improvement in steering stability performance and braking performance. JP 2003-118322 A discloses a pneumatic tire provided with a tread pattern in which at least one sipe is formed, the sipe having a wavy portion, and the wavelength of the wavy portion is gradually increased from the tire surface side toward the deepest part side of the sipe. DE 10 2015 205760 A1 discloses a pneumatic vehicle tire with a tread with profile elements, wherein at least one profile element is provided with at least one incision which runs in the transverse direction and is wave-shaped and has at least one wavelength. DE 10 2012 101149 A1 discloses a pneumatic vehicle tire with a tread which is composed of profile elements, wherein at least one profile element is provided with a fine sipe which extends in the radial direction from the tread periphery into the profile element interior and which has corresponding fine sipe walls in the form of a sinusoidal wave. DE 10 2016 224370 A1 discloses a pneumatic vehicle tire with a profiled tread which has two shoulder block rows with profile blocks, wherein in the profile blocks uniformly step-shaped or wave-shaped incisions are formed.

### SUMMARY

In consideration of the above, an object of the present invention to provide a pneumatic tire that can improve the steering stability performance and improve the braking performance. Another object of the present invention is to provide a tire mold for molding the pneumatic tire that can improve the steering stability performance and improve the braking performance.

A pneumatic tire according to the present invention is a pneumatic tire having a tread including a block in which a waveform sipe is formed. The waveform sipe is formed such that the pitch increases and the amplitude decreases from a block surface side to a block bottom side. The pitch increases with respect to a center of the block in a tire axial direction.

The pneumatic tire according to the present invention makes it possible to improve the steering stability performance and improve the braking performance. Furthermore, the tire mold according to the present invention makes it possible to mold the pneumatic tire that can improve the steering stability performance and improve the braking performance.

### BRIEF DESCRIPTION OF DRAWINGS

Embodiments of the present invention will be described based on the following figures, wherein:
FIG. 1 is a schematic plane view showing blocks of a pneumatic tire according to an embodiment;
FIG. 2 is a schematic view showing a block surface side and a block bottom side of a waveform sipe according to Embodiment 1;
FIG. 3 is a schematic view showing the block surface side and the block bottom side of a waveform sipe according to Embodiment 2;
FIG. 4 is a schematic view showing the block surface side and the block bottom side of a waveform sipe according to another embodiment;
FIG. 5 is a schematic view showing the block surface side and the block bottom side of a waveform sipe according to another embodiment;
FIG. 6 is a schematic view showing a tire mold according to another embodiment;
FIG. 7 is a perspective view showing a sipe blade for Embodiment 1; and
FIG. 8 is a perspective view showing a sipe blade for Embodiment 2.

### DESCRIPTION OF EMBODIMENTS

Embodiments of the present invention will be described in detail hereinafter. In the description below, specific shapes, materials, directions, numerical values, etc. are provided as illustrations for facilitating the understanding of the present invention, and can be appropriately changed according to applications, purposes, specifications, etc.

### [Pneumatic Tire]

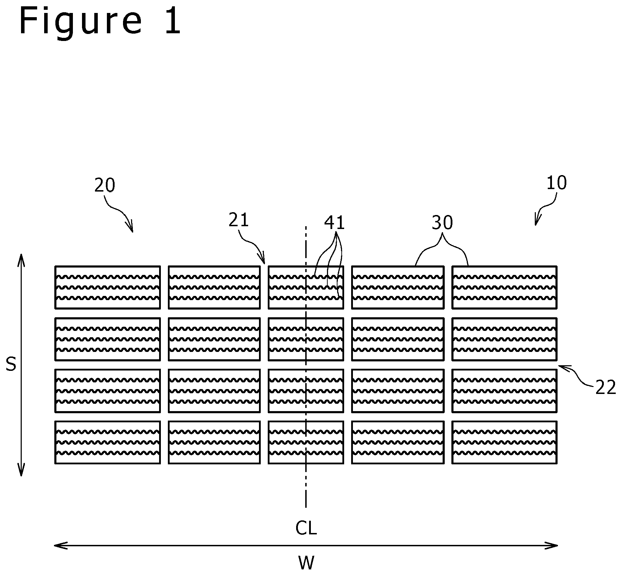

A pneumatic tire 10, which is an embodiment of the present invention, will be described with reference to FIG. 1.

As shown in FIG. 1, the pneumatic tire 10 has a tread 20 that includes blocks 30. The block 30 has waveform sipes 41 formed therein. The pneumatic tire 10 can improve the steering stability performance and improve the braking performance (described in detail below).

Components of the pneumatic tire 10 will be described below with reference to a tire axial direction W, tire circumferential direction S, and tire depth direction D. An equator CL with respect to the tire axial direction W may also be used. The tire depth in the tire depth direction D may be described by using words "block surface side" and "block bottom side".

The tread 20 is a portion of the pneumatic tire 10 that contacts a road surface. The tread 20 has a plurality of blocks 30 separated by major grooves 21 and minor grooves 22. Each of the plurality of blocks 30 is formed to have a rectangular shape. The blocks closer to the equator CL in a plan view have a smaller length in the tire axial direction W. The blocks 30 are arranged into lines in the tread 20. It should be noted that the block 30 according to the present invention is not limited to the rectangular shape according to the present embodiment. The blocks 30 according to the present invention may have a rhombic or parallelogram shape, as long as they are separated by the major grooves 21 and the minor grooves 22.

The major groove 21 is a groove that extends along the tire circumferential direction S. The major groove 21 is formed linearly along the tire circumferential direction S. The minor groove 22 is a groove that extends along the tire axial direction W. The minor groove 22 is formed linearly along the tire axial direction W. It should be noted that the shape of the major grooves 21 or the minor grooves 22 according to the present invention is not limited to that of the major grooves 21 or the minor grooves 22 according to the present embodiment. In the present invention, the major groove 21 may be formed at an angle to the tire circumferential direction S, and the minor groove 22 may be formed at an angle to the tire axial direction W.

### [Waveform Sipe according to Embodiment 1]

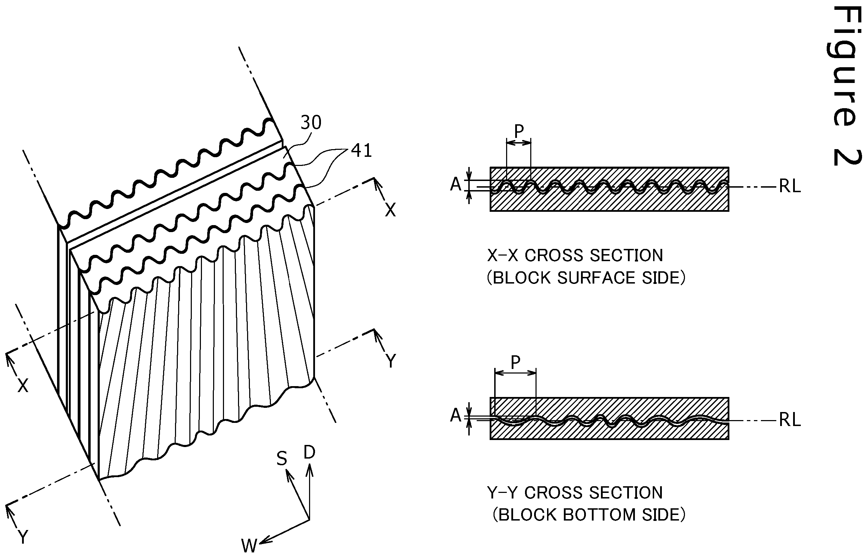

The waveform sipes 41 according to Embodiment 1 will be described with reference to FIG. 2.

As shown in FIG. 2, the waveform sipes 41 are formed in the block 30. For example, three waveform sipes 41 are formed at equal intervals in the tire circumferential direction S of the block 30. The depth of the groove of the waveform sipe 41 is preferably 60 to 80% of the length of the block 30 in the tire depth direction D.

It should be noted that the waveform sipes 41 according to the present invention are not limited to the three waveform sipes 41 formed at equal intervals in the tire circumferential direction S according to the present embodiment. In the present invention, three to five waveform sipes 41 may be formed in the block 30. The waveform sipes 41 according to the present invention may also be formed at an angle to the tire axial direction W. Furthermore, the waveform sipes 41 according to the present invention may be open sipes that penetrate the sides of the block 30 in the tire axial direction W or closed sipes that do not penetrate the sides of the block 30 in the tire axial direction W.

The waveform sipes 41 soften the block 30 to increase the area of the surface that contacts with the road surface, and thereby increase friction with the road surface. The waveform sipes 41 also provide an edge effect and a water removing effect on an icy and snowy road. The edge effect is the effect of increasing grip by scratching the surface of the icy and snowy road with the corners of the blocks 30 or the waveform sipes 41. The water removing effect is the effect of capturing water in a gap in the waveform sipe 41 on the icy and snowy road.

The waveform sipe 41 is formed in a waveform from the block surface side to the block bottom side when viewed from the tire depth direction D. Compared with a general straight sipe, the waveform sipe 41 can further enhance the above edge effect. The waveform according to the present embodiment is similar to a sinusoidal wave when viewed from the tire depth direction D. However, the waveform according to the present invention is a waveform that is a combination of alternate straight and curved lines.

The waveform sipe 41 is formed such that the pitch P increases from the block surface side to the block bottom side along the tire depth direction D. Here, the pitch P is the wavelength of the waveform that is, for example, the length of the waveform sipe 41 in the tire axial direction W from a portion of the waveform sipe 41 that bulges most significantly to one side in the tire circumferential direction S to an adjacent portion of the waveform sipe 41 that bulges most significantly to the one side in the tire circumferential direction S.

The pitch P increases with respect to the center of the block 30 in the tire axial direction W. In other words, the pitch P is formed such that it increases with respect to the center of the block 30 in the tire axial direction W from the block surface side to the block bottom side along the tire depth direction D.

The waveform sipe 41 is also formed such that the amplitude A decreases from the block surface side to the block bottom side along the tire depth direction D. Here, the amplitude A is the amplitude of the waveform, that is, for example, the length of the waveform sipe 41 in the tire circumferential direction S from a portion of the waveform sipe 41 that bulges most significantly to one side in the tire circumferential direction S to an adjacent portion of the waveform sipe 41 that bulges most significantly to the other side in the tire circumferential direction S.

The amplitude A decreases with respect to a reference line RL. Here, the reference line RL is a line extending along the direction in which the waveform sipe 41 is formed, at the center of the thickness (length in the tire circumferential direction S) of the waveform sipe 41. In other words, the amplitude A is formed such that it decreases with respect to the reference line RL from the block surface side to the block bottom side along the tire depth direction D.

The above configuration of the waveform sipes 41 makes it possible to improve the block stiffness of the block 30 on its end sides in the tire axial direction W. This results in improved steering stability performance and improved braking performance of the pneumatic tire 10.

More specifically, the above configuration of the waveform sipes 41 allows the unevenness due to the waveform on the end sides of the block 30 to be widened diagonally toward the end sides in the tire axial direction W from the block surface side to the block bottom side. On the end sides of the block 30, this makes it possible to increase the tightening force among smaller blocks (portions of the block 30 separated by the waveform sipes 41) against the load applied in the tire circumferential direction S and prevent inclination of the smaller blocks, thereby improving the block stiffness.

Although, in general, the block stiffness is lower on the end sides of the block 30 than in the center of the block 30, the above configuration of the waveform sipes 41 makes it possible to improve the block stiffness on the end sides of the block 30. This results in improved steering stability performance and braking performance of the pneumatic tire 10.

### [Waveform Sipe according to Embodiment 2]

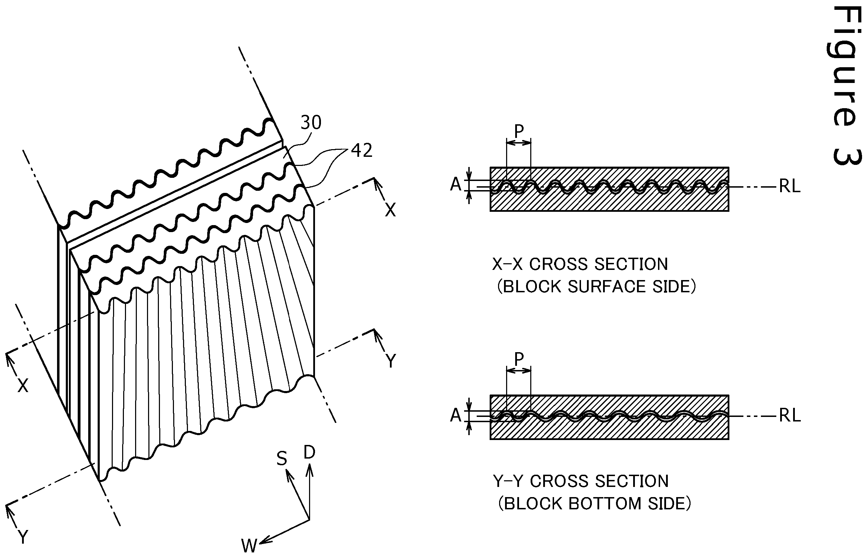

Waveform sipes 42 according to Embodiment 2 will be described with reference to FIG. 3.

As shown in FIG. 3, the waveform sipe 42 is formed in a waveform from the block surface side to the block bottom side when viewed from the tire depth direction D. Hereinafter, only components of the waveform sipes 42 that differ from those of the above waveform sipes 41 will be described, and description of the components similar to those of the waveform sipes 41 will be omitted.

The waveform sipe 42 is formed such that the pitch P increases from the block surface side to the block bottom side along the tire depth direction D. The pitch P increases with respect to one side of the block 30 in the tire axial direction W. In other words, the pitch P is formed such that it increases with respect to the one side of the block 30 in the tire axial direction W from the block surface side to the block bottom side along the tire depth direction D. The one side of the block 30 in the tire axial direction W is preferably on an equator CL side in the tire axial direction W.

The waveform sipe 42 is also formed such that the amplitude A decreases from the block surface side to the block bottom side along the tire depth direction D. The amplitude A decreases with respect to the reference line RL. In other words, the amplitude A is formed such that it decreases with respect to the reference line RL from the block surface side to the block bottom side along the tire depth direction D.

The above configuration of the waveform sipes 42 makes it possible to improve the block stiffness of the block 30 on the other side in the tire axial direction W. This results in improved steering stability performance and braking performance of the pneumatic tire 10.

More specifically, the above configuration of the waveform sipes 42 allows, on the other side of the block 30 in the tire axial direction W, the unevenness due to the waveform to be widened diagonally toward the other side in the tire axial direction W from the block surface side to the block bottom side. Thus, on the other side of the block 30 in the tire axial direction W, the tightening force among the smaller blocks increases against the load applied in the tire circumferential direction S and prevents inclination of the smaller blocks, thereby improving the block stiffness.

In particular, by providing the one side of the block 30 in the tire axial direction W on the equator side in the tire axial direction W, it is possible to improve the block stiffness of the block 30 on its shoulder side in the tire axial direction W. This prevents the blocks from inclining to the shoulder side during cornering, thereby improving the cornering force of the pneumatic tire 10.

### [Other Embodiments]

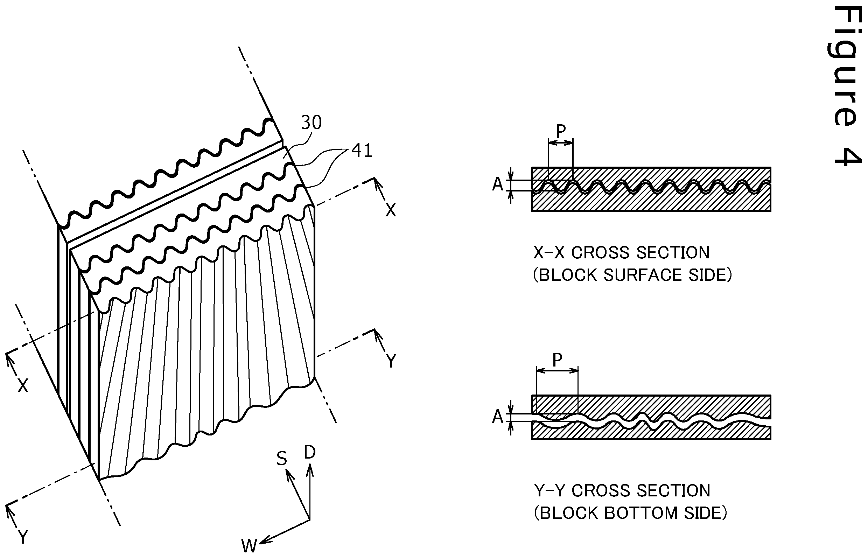

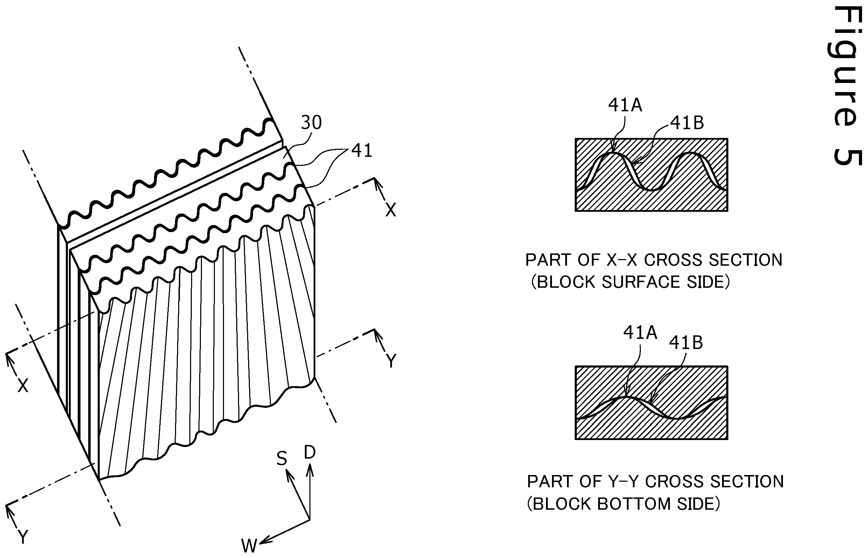

Other embodiments will be described with reference to FIGs 4 and 5.

As shown in FIG. 4, in the waveform sipe 41 of the above Embodiment 1, the thickness (length in the tire circumferential direction S) of the waveform sipe 41 on the block bottom side may be greater than that on the block surface side. The thickness of the waveform sipe 41 may also be continuously increased from the block surface side to the block bottom side.

In general, as the blocks 30 wear, they tend to move more slowly, and the block stiffness becomes generally higher than necessary. In consideration of this, by forming the waveform sipe 41 such that the thickness of the waveform sipe 41 on the block bottom side is greater than that on the block surface side, it is possible to prevent the block stiffness from being higher than necessary.

In addition, the waveform sipe 41 according to the above Embodiment 1 is formed such that the pitch P increases and the amplitude A decreases from the block surface side to the block bottom side, and thus, wear of the blocks shortens the edge length and reduces the edge effect. In consideration of this, by forming the waveform sipe 41 such that the thickness of the waveform sipe 41 on the block bottom side is greater than that on the block surface side, the water removing effect after the wear of the blocks is improved, thereby preventing degradation of the steering stability performance and the braking performance on wet road surfaces.

In the waveform sipe 42 of the above Embodiment 2, the thickness of the waveform sipe 42 on the block bottom side may be greater than that on the block surface side.

As shown in FIG. 5, the waveform sipe 41 according to the above Embodiment 1 may further include a curved portion 41A and a straight portion 41B. The waveform sipe 41 may also be formed such that the thickness of the straight portion 41B is greater than that of the curved portion 41A.

By forming the waveform sipe 41 in this manner, when the waveform sipe 41 is closed, the curved portion 41A fits closely with its corresponding portion before the straight portion 41B fits with its corresponding portion, resulting in a gap between the straight portion 41B and the corresponding portion. This can improve the edge effect and the water removing effect. In particular, the waveform sipe 41 according to the above Embodiment 1 is formed such that the pitch P increases and the amplitude A decreases from the block surface side to the block bottom side, and wear of the blocks thus shortens the edge length and reduces the edge effect. By forming the waveform sipe 41 so as to have the above configuration, the water removing effect after the wear of the wave sipe 41 is improved, thereby preventing degradation of the steering stability performance and the braking performance on wet road surfaces.

The waveform sipe 42 according to the invention further include a curved portion and a straight portion. The waveform sipe 42 is also formed such that the thickness of the straight portion is greater than that of the curved portion.

### [Tire Mold]

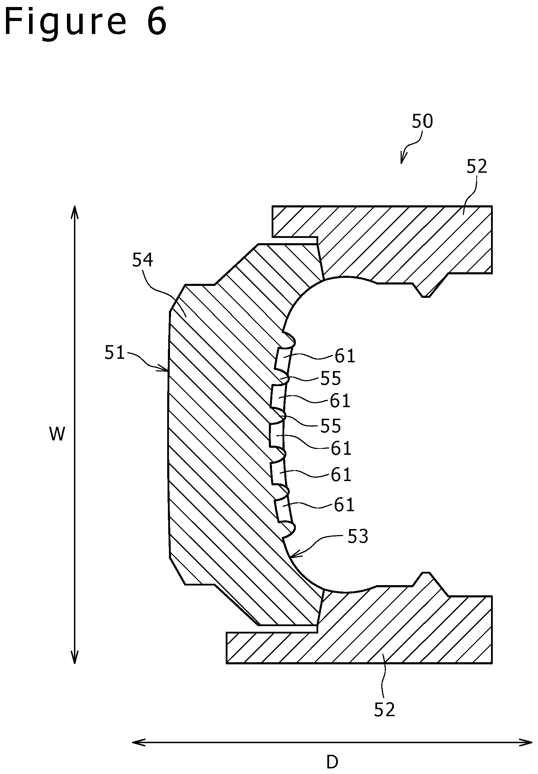

A tire mold 50, which is an embodiment of the present invention, will be described with reference to FIG. 6.

The mold 50 is a mold for forming the above pneumatic tire 10. The pneumatic tire 10 has the tread 20 including the blocks 30, in which the waveform sipes 41 are formed as described above, and sidewalls (not shown) forming side surfaces. By using the mold 50, it is possible to mold the pneumatic tire 10 that can improve the braking performance and improve the steering stability on wet road surfaces.

Components of the mold 50 will be described below with reference to the tire axial direction W, the tire circumferential direction S, and the tire depth direction D of the above pneumatic tire 10 molded by means of the mold 50.

The mold 50 has a tread mold 51 for molding a surface of the tread 20 of the pneumatic tire 10 and a pair of side molds 52 for molding surfaces of the sidewalls.

The tread mold 51 has a body 54 having a tread forming surface 53, projections 55 protruding from the tread forming surface 53, and sipe blades 61 protruding from the tread forming surface 53 and provided between the projections 55.

The body 54 is made of a metallic material, such as aluminum alloy. The aluminum alloy preferably includes AC4 or AC7 aluminum, for example. The projections 55 are portions for molding the major grooves 21 in the pneumatic tire 10. The projections 55 are made of the same material as the body 54.

### [Sipe Blade for Embodiment 1]

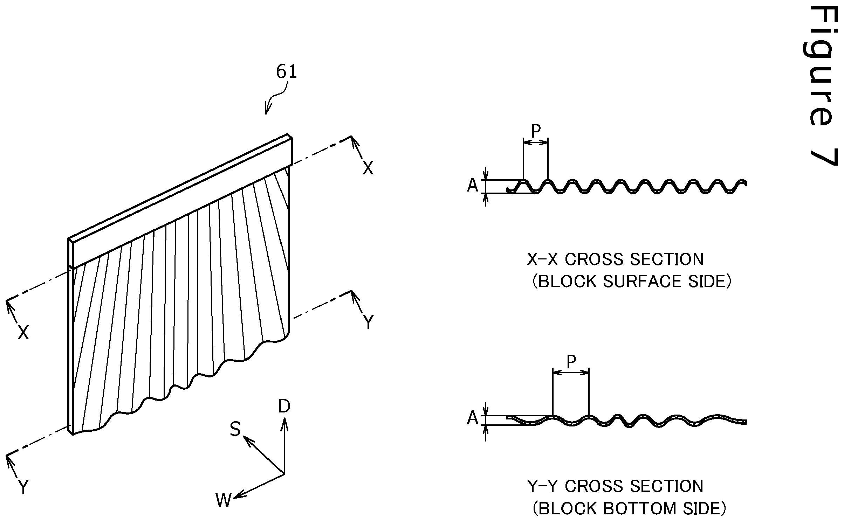

The sipe blades 61 for Embodiment 1 will be described with reference to FIG. 7.

The sipe blades 61 are provided for molding the above waveform sipes 41 in the pneumatic tire 10. The sipe blades 61 protrude in the tire depth direction D from the tread forming surface 53 between the protrusions 55. The sipe blade 61 may be flat and made of a metallic material, such as stainless steel. The stainless steel preferably includes, for example, SUS303, SUS304, SUS630, and SUS631. When a three-dimensional molding machine is used, 17-4PH which is equivalent to SUS304L and SUS630 may be preferably used.

In general, a method of processing the sipe blade 61 includes forming the shape of the sipe blade 61 by using a press molding machine. To cause a change in shape of the sipe blade 61 in the thickness direction as in the sipe blade 61 of the present embodiment, the method may include cutting the sipe blade by machining. A three-dimensional molding machine may be used to make a complicated shape that is difficult to achieve by machining.

As shown in FIG. 7, the sipe blade 61 is formed in a waveform from the block surface side to the block bottom side when viewed from the tire depth direction D. The waveform in the present embodiment is similar to a sinusoidal wave when viewed from the tire depth direction D. However, the waveform according to the present invention is a waveform that is a combination of alternate straight and curved lines.

The sipe blade 61 is formed such that the pitch P increases from the block surface side to the block bottom side along the tire depth direction D. Here, the pitch P is the wavelength of the waveform that is, for example, the length of the sipe blade 61 in the tire axial direction W from a portion of the sipe blade 61 that bulges most significantly to one side in the tire circumferential direction S to an adjacent portion of the sipe blade 61 that bulges most significantly to the one side in the tire circumferential direction S.

The pitch P increases with respect to the center of the sipe blade 61 in the tire axial direction W. In other words, the pitch P is formed such that it increases with respect to the center of the sipe blade 61 in the tire axial direction W from the block surface side to the block bottom side along the tire depth direction D.

The sipe blade 61 is also formed such that the amplitude A decreases from the block surface side to the block bottom side along the tire depth direction D. Here, the amplitude A is the amplitude of the waveform that is, for example, the length of the sipe blade 61 in the tire circumferential direction S from a portion of the sipe blade 61 that bulges most significantly to one side in the tire circumferential direction S to an adjacent portion of the sipe blade 61 that bulges most significantly to the other side in the tire circumferential direction S.

### [Sipe Blade for Embodiment 2]

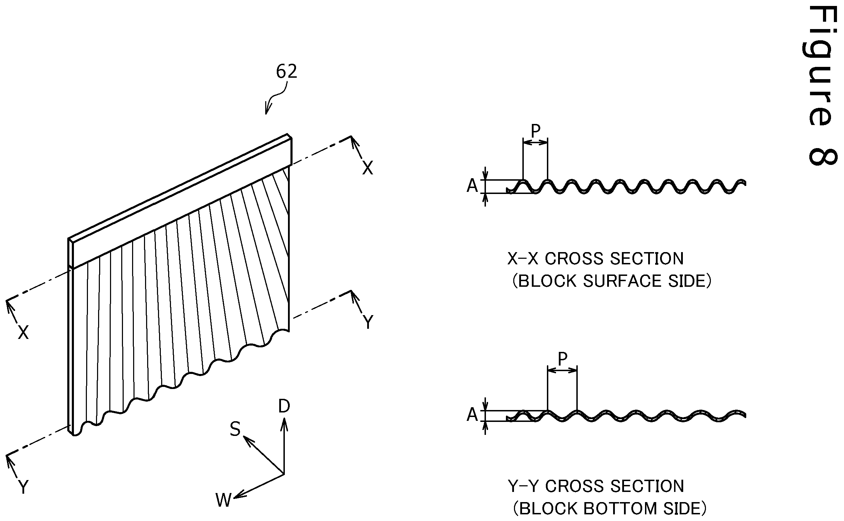

The sipe blade 62 for Embodiment 2 will be described with reference to FIG. 8.

As shown in FIG. 8, the sipe blade 62 is formed in a waveform from the block surface side to the block bottom side when viewed from the tire depth direction D. The sipe blades 62 are provided for molding the above waveform sipes 42 in the pneumatic tire 10. Hereinafter, only components of the sipe blade 62 that differ from those of the above sipe blade 61 will be described, and description of the components similar to those of the sipe blade 61 will be omitted.

The sipe blade 62 is formed such that the pitch P increases from the block surface side to the block bottom side along the tire depth direction D. The pitch P increases with respect to one side of the sipe blade 62 in the tire axial direction W. In other words, the pitch P is formed such that it increases with respect to the one side of the sipe blade 62 in the tire axial direction W from the block surface side to the block bottom side along the tire depth direction D. The one side of the block 30 in the tire axial direction W is preferably on the equator CL side in the tire axial direction W.

The sipe blade 62 is also formed such that the amplitude A decreases from the block surface side to the block bottom side along the tire depth direction D.

The present invention is not limited to the above embodiments and variations thereof, and, as a matter of course, various modifications and improvements can be made within the scope of the appended claims.

## Claims

1. A pneumatic tire (10) having a tread (20) comprising a block (30) in which a waveform sipe (41) is formed, wherein
the waveform sipe (41) is formed such that the amplitude (A) decreases from a block surface side to a block bottom side,
**characterized in that** the waveform sipe (41) is also formed such that the pitch (P) which is the wavelength of the waveform increases with respect to a center of the block (30) in a tire axial direction (W) from the block surface side to the block bottom side along a tire depth direction (D), and
the waveform sipe (41) includes a curved portion (41A) and a straight portion (41B) and is formed such that the thickness of the straight portion (41B) is greater than that of the curved portion (41A).

2. A pneumatic tire (10) having a tread (20) comprising a block (30) in which a waveform sipe (42) is formed, wherein
the waveform sipe (42) is formed such that the amplitude (A) decreases from a block surface side to a block bottom side, and
**characterized in that** the waveform sipe (42) is also formed such that the pitch (P) which is the wavelength of the waveform increases with respect to one side of the block (30) in a tire axial direction (W) from the block surface side to the block bottom side along a tire depth direction (D), and
the waveform sipe (42) includes a curved portion (42A) and a straight portion (42B) and is formed such that the thickness of the straight portion (42B) is greater than that of the curved portion (42A).

3. The pneumatic tire (10) according to Claim 1 or 2, wherein the waveform sipe (41, 42) is formed such that the thickness of the waveform sipe (41, 42) on the block bottom side is greater than that on the block surface side, said thickness measured in a tire circumferential direction (S).

4. A tire mold (50) with a sipe blade (61) for forming a sipe (41) in a block (30) of a tread (20) of a pneumatic tire (10), wherein
the sipe blade (61) is formed in a waveform when viewed from a tire depth direction (D),
the waveform is formed such that the amplitude (A) decreases from a block surface side to a block bottom side,
**characterized in that** the waveform is also formed such that the pitch (P) which is the wavelength of the waveform increases with respect to a center of the side blade (61) in the tire axial direction (W) from the block surface side to the block bottom side along the tire depth direction (D), and
the waveform includes a curved portion and a straight portion and is formed such that the thickness of the straight portion is greater than that of the curved portion.

5. A tire mold (50) with a sipe blade (62) for forming a sipe (42) in a block (30) of a tread (20) of a pneumatic tire (10), wherein
the sipe blade (62) is formed in a waveform when viewed from a tire depth direction (D),
the waveform is formed such that the amplitude (A) decreases from a block surface side to a block bottom side,
**characterized in that** the waveform is also formed such that the pitch (P) which is the wavelength of the waveform increases with respect to one side of the sipe blade (62) in a tire axial direction (W) from the block surface side to the block bottom side along the tire depth direction (D), and
the waveform includes a curved portion and a straight portion and is formed such that the thickness of the straight portion is greater than that of the curved portion.

## Patentansprüche

1. Luftreifen (10) mit einer Lauffläche (20), die einen Block (30) aufweist, in dem eine wellenförmige Lamelle (41) ausgebildet ist, wobei
die wellenförmige Lamelle (41) so ausgebildet ist, dass die Amplitude (A) von einer Blockoberflächenseite zu einer Blockunterseite abnimmt,
**dadurch gekennzeichnet, dass** die wellenförmige Lamelle (41) auch so ausgebildet ist, dass die Lamellenlänge (P), die die Wellenlänge der Wellenform ist, in Bezug auf eine Mitte des Blocks (30) in einer axialen Richtung (W) des Reifens von der Blockoberflächenseite zu der Blockunterseite entlang einer Reifentiefenrichtung (D) zunimmt, und
die wellenförmige Lamelle (41) einen gekrümmten Abschnitt (41A) und einen geraden Abschnitt (41B) enthält und so ausgebildet ist, dass die Dicke des geraden Abschnitts (41B) größer als die des gekrümmten Abschnitts (41A) ist.

2. Luftreifen (10) mit einer Lauffläche (20), die einen Block (30) aufweist, in dem eine wellenförmige Lamelle (42) ausgebildet ist, wobei
die wellenförmige Lamelle (42) so ausgebildet ist, dass die Amplitude (A) von einer Blockoberflächenseite zu einer Blockunterseite abnimmt, und
**dadurch gekennzeichnet, dass** die wellenförmige Lamelle (42) derart ausgebildet ist, dass die Lamellenlänge (P), die die Wellenlänge der Wellenform ist, in Bezug auf eine Seite des Blocks (30) in einer axialen Richtung (W) des Reifens von der Blockoberflächenseite zu der Blockunterseite entlang einer Reifentiefenrichtung (D) zunimmt, und
die wellenförmige Lamelle (42) einen gekrümmten Abschnitt (42A) und einen geraden Abschnitt (42B) enthält und so ausgebildet ist, dass die Dicke des geraden Abschnitts (42B) größer als die des gekrümmten Abschnitts (42A) ist.

3. Luftreifen (10) nach Anspruch 1 oder 2, wobei die wellenförmige Lamelle (41, 42) derart geformt ist, dass die Dicke der wellenförmigen Lamelle (41, 42) auf der Blockunterseite größer ist als die auf der Blockoberflächenseite, wobei die Dicke in einer Reifenumfangsrichtung (S) gemessen wird.

4. Reifenform (50) mit einem Lamellenblatt (61) zum Bilden einer Lamelle (41) in einem Block (30) einer Lauffläche (20) eines Luftreifens (10), wobei
das Lamellenblatt (62) in einer Wellenform gebildet ist, wenn es von einer Reifentiefenrichtung (D) aus betrachtet wird,
wobei die Wellenform so gebildet ist, dass die Amplitude (A) von einer Blockoberflächenseite zu einer Blockunterseite abnimmt,
**dadurch gekennzeichnet, dass** die Wellenform auch so geformt ist, dass die Lamellenlänge (P), die die Wellenlänge der Wellenform ist, in Bezug auf eine Mitte des Seitenblatts (61) in der axialen Richtung (W) des Reifens von der Blockoberflächenseite zu der Blockunterseite entlang der Reifentiefenrichtung (D) zunimmt, und
die Wellenform einen gekrümmten Abschnitt und einen geraden Abschnitt enthält und so geformt ist, dass die Dicke des geraden Abschnitts größer als die des gekrümmten Abschnitts ist.

5. Reifenform (50) mit einem Lamellenblatt (62) zum Bilden einer Lamelle (42) in einem Block (30) einer Lauffläche (20) eines Luftreifens (10), wobei
das Lamellenblatt (62) in einer Wellenform gebildet ist, wenn es von einer Reifentiefenrichtung (D) aus betrachtet wird,
wobei die Wellenform so gebildet ist, dass die Amplitude (A) von einer Blockoberflächenseite zu einer Blockunterseite abnimmt,
**dadurch gekennzeichnet, dass** die Wellenform auch so geformt ist, dass die Lamellenlänge (P), die die Wellenlänge der Wellenform ist, in Bezug auf eine Seite des Lamellenblatts (62) in einer axialen Richtung (W) des Reifens von der Blockoberflächenseite zu der Blockunterseite entlang der Reifentiefenrichtung (D) zunimmt, und
die Wellenform einen gekrümmten Abschnitt und einen geraden Abschnitt enthält und so geformt ist, dass die Dicke des geraden Abschnitts größer als die des gekrümmten Abschnitts ist.

## Revendications

1. Pneumatique (10) ayant une bande de roulement (20) comprenant un bloc (30) dans lequel est formée une lamelle (41) en forme d'onde, dans lequel :
la lamelle (41) en forme d'onde est formée de sorte que l'amplitude (A) diminue à partir d'un côté de surface de bloc jusqu'à un côté de fond de bloc,
**caractérisé en ce que** la lamelle (41) en forme d'onde est également formée de sorte que le pas (P) qui est la longueur d'onde de la forme d'onde augmente par rapport à un centre du bloc (30) dans une direction axiale (W) du pneu à partir du côté de surface de bloc jusqu'au côté de fond de bloc le long de la direction de profondeur (D) du pneu, et
la lamelle (41) en forme d'onde comprend une partie courbée (41A) et une partie droite (41B) et est formée de sorte que l'épaisseur de la partie droite (41B) est supérieure à celle de la partie courbée (41A).

2. Pneumatique (10) ayant une bande de roulement (20) comprenant un bloc (30) dans lequel est formée une lamelle (42) en forme d'onde, dans lequel :
la lamelle (42) en forme d'onde est formée de sorte que l'amplitude (A) diminue à partir d'un côté de surface de bloc jusqu'à un côté de fond de bloc, et
**caractérisé en ce que** la lamelle (42) en forme d'onde est également formée de sorte que le pas (P) qui est la longueur d'onde de la forme d'onde augmente par rapport à un côté du bloc (30) dans une direction axiale (W) du pneu à partir du côté de surface de bloc jusqu'à un côté de fond de bloc le long d'une direction de profondeur (D) du pneu, et
la lamelle (42) en forme d'onde comprend une partie courbée (42A) et une partie droite (42B) et est formée de sorte que l'épaisseur de la partie droite (42B) est supérieure à celle de la partie courbée (42A).

3. Pneumatique (10) selon la revendication 1 ou 2, dans lequel la lamelle (41, 42) en forme d'onde est formée de sorte que l'épaisseur de la lamelle (41, 42) en forme d'onde sur le côté de fond de bloc est supérieure à celle du côté de surface de bloc, ladite épaisseur étant mesurée dans une direction circonférentielle (S) du pneu.

4. Moule de pneu (50) avec une lame de lamelle (61) pour former une lamelle (41) dans un bloc (30) d'une bande de roulement (20) d'un pneumatique (10), dans lequel :
la lame de lamelle (61) est formée selon une forme d'onde, lorsqu'elle est observée dans une direction de profondeur (D) du pneu,
la forme d'onde est formée de sorte que l'amplitude (A) diminue à partir d'un côté de surface de bloc jusqu'à un côté de fond de bloc,
**caractérisé en ce que** la forme d'onde est également formée de sorte que le pas (P) qui est la longueur d'onde de la forme d'onde augmente par rapport à un centre de la lame latérale (61) dans la direction axiale (W) du pneu à partir du côté de surface de bloc jusqu'au côté de fond de bloc le long de la direction de profondeur (D) du pneu, et
la forme d'onde comprend une partie courbée et une partie droite et est formée de sorte que l'épaisseur de la partie droite est supérieure à celle de la partie courbée.

5. Moule de pneu (50) avec une lame de lamelle (62) pour former une lamelle (42) dans un bloc (30) d'une bande de roulement (20) d'un pneumatique (10), dans lequel :
la lame de lamelle (62) est formée selon une forme d'onde lorsqu'elle est observée à partir d'une direction de profondeur (D) du pneu,
la forme d'onde est formée de sorte que l'amplitude (A) diminue à partir d'un côté de surface de bloc jusqu'à un côté de fond de bloc,
**caractérisé en ce que** la forme d'onde est également formée de sorte que le pas (P) qui est la longueur d'onde de la forme d'onde augmente par rapport à un côté de la lame de lamelle (62) dans une direction axiale (W) du pneu à partir du côté de surface de bloc jusqu'au côté de fond de bloc le long de la direction de profondeur (D) du pneu, et
la forme d'onde comprend une partie courbée et une partie droite et est formée de sorte que l'épaisseur de la partie droite est supérieure à celle de la partie courbée.
